Europäisches Patentamt

European Patent Office

Office européen des brevets

(11) Numéro de publication: **0 332 508 B1**

(12) **FASCICULE DE BREVET EUROPEEN**

(45) Date de publication de fascicule du brevet: **08.09.93** (51) Int. Cl.⁵: $G01N\ 21/21$

(21) Numéro de dépôt: **89400582.6**

(22) Date de dépôt: **02.03.89**

(54) Appareil d'analyse par ellipsométrie, procédé d'analyse ellipsométrique d'un échantillon et application à la mesure de variation d'épaisseur des couches minces.

(30) Priorité: **04.03.88 FR 8802784**

(43) Date de publication de la demande:
**13.09.89 Bulletin  89/37**

(45) Mention de la délivrance du brevet:
**08.09.93 Bulletin  93/36**

(84) Etats contractants désignés:
**BE CH DE FR GB IT LI NL**

(56) Documents cités:
**FR-A- 2 365 793**

**PATENT ABSTRACTS OF JAPAN, vol. 10, no. 101 (P-447)[2158], 17 avril 1986, page 92 P 447; & JP-A-60 233 533**

**SPIE - PROCEEDINGS OF THE SOCIETY OF PHOTO OPTICAL INSTRUMENTATION ENGINEERS, vol. 276, 1981, pages 180-186, Ed. Spie, Bellingham, WA, US; R.M.A. AZZAM: "Ellipsometric configurations and techniques"**

**IBM TECHNICAL DISCLOSURE BULLETIN, vol. 19, no. 11, avril 1977, pages 4134-4135, New York, US; F.E. BOYD et al.: "Automatic ellip- someter system"**

(73) Titulaire: **FRANCE TELECOM**
**6, Place d'Alleray**
**F-75015 Paris(FR)**

(72) Inventeur: **Vareille, Aimé**
**3, Rue Gabriel Didier**
**F-38130 Echirolles(FR)**
Inventeur: **Vuillod, Yves**
**5 Lotissement du Coteau, Cédex 231 B**
**F-38190 Crolles(FR)**
Inventeur: **Thévenot, Louis**
**3, Allée de la Piat**
**F-38240 Meylan(FR)**

(74) Mandataire: **Mongrédien, André et al**
**c/o BREVATOME 25, rue de Ponthieu**
**F-75008 Paris (FR)**

## Description

L'invention se rapporte à un appareil d'analyse d'un échantillon par la mesure de ses paramètres d'ellipsométrie, à un procédé d'analyse ellipsométrique réalisable notamment avec cet appareil et à l'application de cet analyseur ou de ce procédé à la mesure de variation d'épaisseur de couches minces en fonction du temps, par croissance ou au contraire gravure de celles-ci.

Plusieurs appareils existants permettent d'obtenir les paramètres d'ellipsométrie $\psi$ (ellipticité) et $\Delta$ (déphasage) d'une vibration lumineuse elliptique. Ils présentent tous par rapport à l'invention des inconvénients de précision insuffisante ou de mise en oeuvre trop lente. Ce dernier inconvénient est particulièrement regrettable quand on s'intéresse aux phénomènes liés à l'évolution d'épaisseur de couches minces, qui peut nécessiter des mesures chaque milliseconde.

On connaît ainsi un appareil d'après lequel un faisceau lumineux, produit par un laser, passe par un polariseur rectiligne et une lame quart d'onde avant d'atteindre l'échantillon à analyser, contre lequel il se réfléchit avant de passer par un analyseur et d'être recueilli par un photodétecteur. Les paramètres d'ellipsométrie sont obtenus par rotation successivement du polariseur et de l'analyseur, quand l'extinction de la lumière arrivant au photodétecteur est réalisée. Cet appareil n'est pas prévu pour des mesures rapides, car l'ensemble des opérations dure une vingtaine de secondes.

Un appareil plus rapide de même famille utilise un analyseur tournant, le polariseur restant immobile. La lumière recueillie par le photodétecteur est une sinusoïde à deux périodes par tour d'analyseur. Les paramètres d'ellipsométrie sont déterminés par le rapport de l'amplitude maximale et de l'amplitude minimale de la lumière captée, ainsi que par la phase de la sinusoïde.

Les mesures avec cet appareil sont très sensibles aux lumières parasites qu'il n'est plus possible de mettre en évidence puisqu'on ne recherche plus l'extinction du faisceau. Un autre inconvénient est que l'appareil ne fournit pas directement la valeur du déphasage $\Delta$, mais seulement son sinus ou son cosinus selon qu'on emploie une lame quart d'onde ou non ; des incertitudes apparaissent aux extrémums de ces fonctions circulaires.

D'autres appareils connus, utilisant un échantillon dichroïque par exemple, présentent les mêmes inconvénients.

Le brevet français 2 365 793 décrit un appareil et un procédé pour déterminer les paramètres d'ellipsométrie en mesures de photo-élasticimétrie. Un biréfringent tournant est utilisé et les paramètres sont calculés en utilisant les harmoniques de deuxième et de quatrième ordre, mais sans procéder à des mesures d'intensité comme dans l'invention.

L'invention permet par contre d'obtenir les paramètres ellipsométriques $\Delta$ et $\psi$ rapidement et avec précision. Elle consiste en un appareil qui effectue une mesure d'intensité lumineuse en fonction de la rotation d'un dispositif tournant décomposant le faisceau lumineux en deux ondes déphasées et plus particulièrement des intensités correspondant aux harmoniques deux et quatre de cette rotation, et à un procédé correspondant.

L'appareil selon l'invention est plus précisément conforme sous sa forme la plus générale à la revendication 1, et le procédé à la revendication 7.

De préférence, les éléments décomposent le faisceau en deux ondes déphasées d'un quart d'onde environ. Des lames biréfringentes peuvent être employées.

Une analyse peut être effectuée par rotation du dispositif, ce qui est très avantageux pour la mesure sur des échantillons dont l'épaisseur varie rapidement avec le temps par croissance ou par gravure.

On va maintenant décrire l'invention plus en détail à l'aide des figures suivantes, annexées à titre illustratif et nullement limitatif :

- la figure 1 représente un schéma d'ensemble de l'invention,
- la figure 2 représente un schéma d'ensemble d'un autre mode de réalisation de l'invention,
- la figure 3 représente l'ensemble de lames biréfringentes présent sur les appareils des figures 1 et 2,
- la figure 4 représente plus concrètement une partie du dispositif de la figure 1.

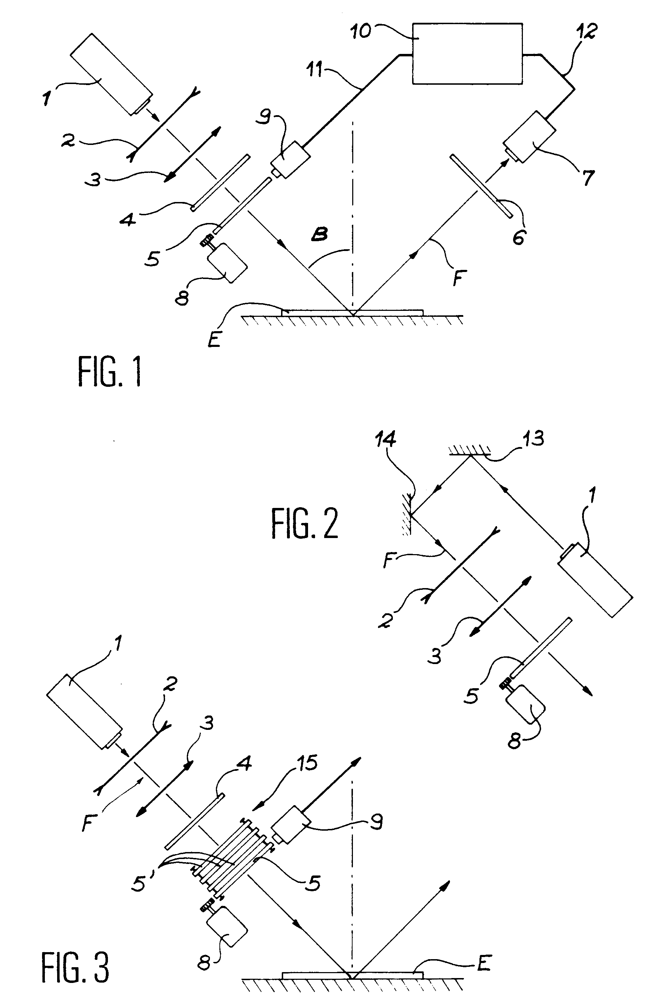

La figure 1 représente tout d'abord un laser 1 au néon-hélium qui émet un faisceau lumineux F monochromatique. Le faisceau lumineux F passe successivement par une lentille 2 focalisant le faisceau lumineux F sur un échantillon E à mesurer, un polariseur circulaire 3 qui permet de régler l'intensité lumineuse, un polariseur linéaire 4 et un ensemble de lames biréfringentes, dont une seule 5 est représentée, avant d'atteindre l'échantillon E qu'il traverse avant d'être réfléchi, de passer par un analyseur 6 qui le polarise linéairement, et d'être recueilli et mesuré par un photodétecteur 7.

L'ensemble de lames biréfringentes tourne sous l'action d'un moteur 8 à une vitesse de rotation $\omega$ constante ; la bande passante du photodétecteur 7 s'étend au moins entre le continu et la fréquence $8\omega/2\pi$. Un codeur 9 détecte des graduations au bord de la lame biréfringente 5 et envoie alors des impulsions d'ordre de mesure à un système central 10 par une ligne 11 ; le système central 10 mesure à ces instants la lumière recueillie par le photodétecteur 7 par une ligne 12.

Le faisceau lumineux F atteint l'échantillon E sous un angle d'incidence B d'environ 70°.

La disposition de la figure 2 diffère de celle de la figure 1 entre le laser 1 et la lentille de focalisation 2 : deux miroirs perpendiculaires 13 et 14 réfléchissent le faisceau lumineux F à cet endroit, si bien qu'il est possible de placer le laser 1 à proximité du moteur 8 en particulier, le faisceau F à la sortie du laser 1 étant orienté à l'opposé de l'échantillon E.

On obtient ainsi un dispositif replié plus compact, mais par ailleurs exactement semblable par sa constitution et son fonctionnement à celui de la figure 1.

On voit sur la figure 3 que plusieurs lames biréfringentes supplémentaires 5' sont empilées au-dessus de la lame biréfringente 5, liées à elle par un système de liaison 15 et donc également entraînées en rotation par le moteur 8 à la vitesse angulaire $\omega$.

Cet empilement de lames biréfringentes 5 et 5' équivaut optiquement à un pouvoir rotatoire suivi d'une biréfringence, mais dont on peut ajuster les caractéristiques. Il est en particulier plus facile d'obtenir un déphasage d'unquart d'onde entre les deux vibrations produites par biréfringence, ce qui est avantageux pour la précision des mesures.

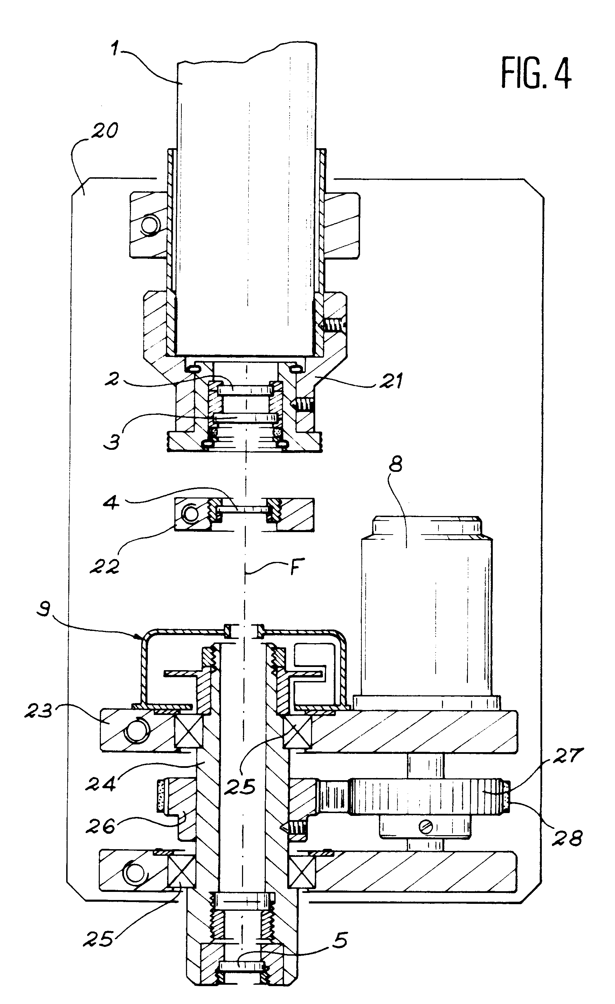

D'après la figure 4, le laser 1 est fixé rigidement à un bâti 20 et est muni d'un premier support 21 qui porte la lentille de focalisation 2 et le polariseur circulaire 3. Un deuxième support 22 attaché au bâti 20 porte le polariseur linéaire 4 et permet d'y accéder facilement pour éventuellement l'orienter. Un troisième support 23, attaché au bâti 20, porte le moteur 8, le codeur 9, et un arbre creux 24 qui porte les lames biréfringentes 5 et 5'. L'arbre creux 24 tourne dans le troisième support 23 par l'intermédiaire de deux paliers à roulement 25, et il porte un pignon récepteur 26 qu'entraîne le moteur 8 par l'intermédiaire d'un pignon moteur 27 et d'une courroie crantée 28. Le faisceau F passe à travers le creux de l'arbre 24.

On va maintenant décrire comment fonctionne l'appareil. La première étape consiste à orienter l'analyseur 6 de manière à obtenir une composante lumineuse d'harmonique deux aussi intense que possible. L'échantillon E est alors remplacé par un échantillon de référence adapté à ce réglage, tel qu'une tranche de silice thermique de 100 nanomètres d'épaisseur.

La mesure elle-même vient ensuite : le moteur 8 est mis en marche et le système central 10 recueille périodiquement les informations fournies par le photodétecteur 7. L'intensité lumineuse à la sortie de l'analyseur 6 comprend une composante constante d'amplitude H0, une composante de pulsation $2\omega$ d'amplitude H2 et une composante de pulsation $4\omega$ d'amplitude H4.

On démontre que :

$$H2 = rs.rs^*.\sin(2A)\ tg\psi\sin\Delta\sin(b)\sin(2u-2R-2P)$$
$$H4 = (1/2)rs.rs^*.\{[tg^2\psi-1+\cos(2A)(tg^2\psi+1)]\ [1-\cos(b)].$$
$$.\cos(4u-2P)\ +\ \sin(2A)\ tg\psi\cos\ \Delta[1-\cos(b)]\ \sin(4u+2R-2P)\}$$

où rs désigne le coefficient complexe de réflexion de l'échantillon E perpendiculairement au plan d'incidence, * le conjugué complexe, A et P les angles des directions de polarisation de l'analyseur 6 et du polariseur 4 avec le plan d'incidence (plan des figures 1 à 3), u l'angle variable de l'axe rapide des lames biréfringentes 5 et 5' avec le plan d'incidence et b et R le déphasage et le pouvoir rotatoire introduits par les lames biréfringentes 5 et 5'.

La comparaison en amplitude et en phase de H2 et H4 permet d'obtenir les valeurs souhaitées de $\psi$ et $\Delta$.

On constate que $\psi$ est connu par sa tangente, c'est-à-dire par une fonction sans extrémum et qui ne permet donc pas d'incertitude importante sur $\psi$, tandis que $\Delta$ intervient à la fois par son cosinus et son sinus, ce qui a le même effet bénéfique. L'omission de l'amplitude H0 permet de s'affranchir de l'influence de la lumière parasite tout en permettant des mesures à une cadence plus rapide.

L'appareil décrit dans ce texte peut être utilisé en réflectométrie, polarimétrie, photoélasticimétrie, et aussi en ellipsométrie des couches minces, afin de suivre leur croissance ou leur gravure selon le cas.

D'autres dispositifs que les lames biréfringentes 5 et 5' peuvent être employés, par exemple des prismes à réflexion totale tels que des rhomboèdres de Fresnel, à condition de produire le même effet de décomposition du faisceau lumineux en deux ondes déphasées. L'appareil peut par ailleurs comporter des éléments présentant un dichroïsme, car les formules précédentes peuvent être obtenues même si les éléments décomposant le faisceau lumineux n'effectuent qu'une polarisation partielle.

La source lumineuse pourra émettre une lumière non monochromatique. On interposera alors un filtre à un endroit quelconque du faisceau lumineux F pour analyser une lumière monochromatique.

L'appareil décrit possède un avantage supplémentaire qui consiste à pouvoir être calibré sans connaissance précise des angles A, P et u au départ. Pour cela, on dispose un échantillon de calibration E ayant une épaisseur variable ou une série d'épaisseurs différentes, de 50 à 100 nanomètres par exemple, et on effectue une série de mesures des paramètres d'ellipsométrie pour des épaisseurs différentes de l'échantillon de calibration à l'aide des formules écrites plus haut et de la connaissance approximative des angles A, P et u.

La forme des courbes exprimant les valeurs de $\psi$ et $\Delta$ en fonction de l'épaisseur est comparée à des courbes admissibles avec l'échantillon de calibration et calculées analytiquement. La comparaison des courbes expérimentales et des courbes admissibles fournit les erreurs sur l'évaluation des angles A, P et u.

Les valeurs réelles de ces angles sont ensuite utilisées dans les formules exprimant H2 et H4 quand les mesures sur les échantillons réels sont effectuées. On se dispense des réglages manuels fastidieux de la position des éléments optiques qui sont souvent nécessaires avec les appareils connus.

## Revendications

1. Appareil d'analyse d'échantillon (E) par ellipsométrie comprenant une source (1) de faisceau lumineux (F), le faisceau lumineux passant par un polariseur linéaire (4), par un analyseur (6) et aboutissant à un ensemble de mesure (7, 10) après être passé par l'échantillon (E), l'échantillon étant placé entre le polariseur linéaire et l'analyseur, caractérisé en ce qu'il comprend plusieurs éléments (5) décomposant le faisceau en deux ondes déphasées entre le polariseur linéaire (4) et l'échantillon (E), les éléments décomposant le faisceau tournant à la même vitesse angulaire et étant empilés les uns sur les autres.

2. Appareil d'analyse par ellipsométrie suivant la revendication 1, caractérisé en ce que les éléments décomposant le faisceau sont des lames biréfringentes.

3. Appareil d'analyse par ellipsométrie suivant la revendication 1 ou 2, caractérisé en ce que les éléments (5) décomposent le faisceau (F) en deux ondes déphasées environ d'un quart d'onde.

4. Appareil d'analyse par ellipsométrie suivant l'une quelconque des revendication 1 à 3, caractérisé en ce qu'il comprend une lentille (2) focalisant le faisceau lumineux sur l'échantillon.

5. Appareil d'analyse par ellipsométrie suivant l'une quelconque des revendications 1 à 4, caractérisé en ce que le faisceau lumineux (F) est réfléchi, entre la source (1) et l'échantillon (E), par des miroirs (13, 14).

6. Appareil d'analyse par ellipsométrie suivant l'une quelconque des revendications 1 à 5, caractérisé en ce que les éléments décomposant le faisceau sont empilés dans un arbre creux et le faisceau passe au centre desdits éléments.

7. Procédé pour analyser un échantillon par ellipsométrie en y faisant passer un faisceau lumineux (F) polarisé ayant passé auparavant par un dispositif (5) rotatif qui le décompose en deux ondes déphasées, consistant à recueillir et séparer deux composantes lumineuses périodiques ayant deux et quatre périodes par rotation du dispositif (5) de décomposition du faisceau et à comparer leurs phases, caractérisé en ce que les intensités des deux composantes lumineuses sont également comparées et en ce qu'il utilise un appareil où le faisceau passe successivement par un polariseur linéaire, le dispositif de décomposition du faisceau, l'échantillon et un analyseur et en ce qu'il utilise les formules :

$$H2 = rs.rs^*.\sin(2A) \ tg\psi \sin\Delta \sin(b)\sin(2u-2R-2P)$$
$$H4 = (1/2)rs.rs^*.\{[tg^2\psi-1+\cos(2A)(tg^2\psi+1)] \quad [1-\cos(b)].$$
$$.\cos(4u-2P) + \sin(2A) \ tg\psi\cos \Delta[1-\cos(b)] \sin-(4u+2R-2P)\}$$

où rs désigne le coefficient complexe de réflexion de l'échantillon E perpendiculairement au plan d'incidence du faisceau, * le conjugué complexe, A et P les angles des directions de polarisation de l'analyseur et du polariseur avec le plan d'incidence, u l'angle variable de l'axe rapide des lames biréfringentes constituant le dispositif de décomposition du faisceau et b et R le déphasage et le pouvoir rotatoire introduits par les lames biréfringentes.

8. Procédé pour analyser un échantillon par ellipsométrie suivant la revendication 7, caractérisé en ce qu'une analyse est faite par rotation du dispositif (5) de décomposition du faisceau.

9. Procédé pour analyser un échantillon par ellipsométrie suivant la revendication 7 ou 8, caractérisé en ce qu'il comprend une étape préliminaire de calibration consistant à :
   - ajuster approximativement les angles des directions de polarisation de l'analyseur et du polariseur ainsi que l'angle de l'axe rapide des lames biréfringentes ;
   - effectuer des mesures par ellipsométrie à l'aide des formules, sur un échantillon de calibration ;
   - comparer les mesures à des résultats théoriquement admissibles pour en déduire des informations de correction des valeurs d'ajustement des angles, et

- corriger les valeurs d'ajustement des angles utilisées dans les formules à l'aide de ces informations.

**10.** Procédé pour analyser un échantillon par ellipsométrie suivant l'une quelconque des revendications 7 ou 8, caractérisé en ce que l'échantillon est une couche mince ayant une épaisseur variable avec le temps.

**Claims**

**1.** Apparatus for the analysis of a sample (E) by ellipsometry comprising a source (1) for a light beam (F), the light beam passing through a linear polarizer (4) and an analyser (6) and leading to a measuring arrangement (7, 10) after being passed through the sample (E), the sample being placed between the linear polarizer and the analyzer, characterized in that it comprises several elements (5) splitting the beam into two phase-displaced waves between the linear polarizer (4) and the sample (E), the elements splitting the beam rotating at the same angular velocity and being stacked on one another.

**2.** Apparatus for analysis by ellipsometry according to claim 1, characterized in that the elements splitting the beam are birefringent plates.

**3.** Apparatus for analysis by ellipsometry according to claims 1 or 2, characterized in that the elements (5) split the beam (F) into two waves phase-displaced by approximately a quarter wave.

**4.** Apparatus for analysis by ellipsometry according to any one of the claims 1 to 3, characterized in that it comprises a lens (2) focusing the light beam on the sample.

**5.** Apparatus for analysis by ellipsometry according to any one of the claims 1 to 4, characterized in that the light beam (F) is reflected, between the source (1) and the sample (E), by the mirrors (13, 14).

**6.** Apparatus for analysis by ellipsometry according to any one of the claims 1 to 5, characterized in that the elements splitting the beam are stacked in a hollow shaft and the beam passes through the centre of said elements.

**7.** Method for analyzing a sample by ellipsometry by passing into it a polarized light beam (F), which has previously passed through a rotary device (5), which splits it into two phase-displaced waves, consisting of collecting and separating two periodic light components having two and four periods per rotation of the beam splitting device (5) and comparing their phases, characterized in that the intensities of the two light components are also compared and in that it uses an apparatus where the beam passes successively through a linear polarizer, the beam splitting device, the sample and an analyzer and in that it uses the formulas:

$$H2 = rs.s^*.\sin(2A)\ tg\psi\sin\Delta\sin(b)\sin(2u-2R-2P)$$
$$H4 = (1/2)rs.rs^*.\{[tg^2\psi-1+\cos(2A)(tg^2\psi+1]\ [1-\cos(b)]$$
$$.\cos(4u-2P) + \sin(2A)\ tg\psi\cos\Delta[1-\cos(b)]\ \sin(4u+2R-2P)\}$$

in which rs designates the complex reflection coefficient of the sample E perpendicular to the plane of incidence of the beam, * the complex conjugate, A and P the angles of the polarization directions of the analyzer and the polarizer with the incidence plane, in the variable angle of the fast axis of the birefringent plates constituting the beam splitting device and b and R the phase displacement and rotary power introduced by the birefringent plates.

**8.** Method for analyzing a sample by ellipsometry according to claim 7, characterized in that an analysis is made by rotating the beam splitting device (5).

**9.** Method for analyzing a sample by ellipsometry according to claim 7 or 8, characterized in that it comprises a preliminary calibration stage consisting of approximately adjusting the angles of the polarization directions of the analyzer and the polarizer, as well as the angle of the fast axis of the birefringent plates, performing measurements by ellipsometry with the aid of the formulas on a calibration sample, comparing the measurements with theoretically admissible results in order to deduce therefrom the correction informations for the angle adjustment values and correcting the adjustments values of the angles used in the formulas with the aid of these informations.

**10.** Method for analyzing a sample by ellipsometry according to either of the claims 7 or 8, characterized in that the sample is a thin film having a time-variable thickness.

## Patentansprüche

1. Apparat zur ellipsometrischen Untersuchung einer Probe (E), umfassend eine Quelle (1) eines Lichtbündels (F), wobei das Lichtbündel durch einen linearen Polarisator (4) und einen Analysator (6) tritt und in einer Meßanordnung (7, 10) endigt, nachdem es über die Probe (E) gelaufen ist, wobei die Probe zwischen den linearen Polarisator und den Analysator gestellt ist, dadurch gekennzeichnet, daß er mehrere Elemente (5) umfaßt, die zwischen dem linearen Polarisator (4) und der Probe (E) das Bündel in zwei phasenverschobene Wellen zerlegen, wobei die das Bündel zerlegenden Elemente sich mit gleicher Winkelgeschwindigkeit drehen und übereinandergeschichtet sind.

2. Apparat zur ellipsometrischen Untersuchung nach Anspruch 1, dadurch gekennzeichnet, daß die das Bündel zerlegenden Elemente doppelbrechende Platten sind.

3. Apparat zur ellipsometrischen Untersuchung nach Anspruch 1 oder 2, dadurch gekennzeichnet, daß die Elemente (5) das Bündel (F) in zwei um ungefähr eine Viertelwelle phasenverschobene Wellen zerlegen.

4. Apparat zur ellipsometrischen Untersuchung nach einem der Ansprüche 1 bis 3, dadurch gekennzeichnet, daß er eine Linse (2) umfaßt, die das Lichtbündel auf die Probe bündelt.

5. Apparat zur ellipsometrischen Untersuchung nach einem der Ansprüche 1 bis 4, dadurch gekennzeichnet, daß das Lichtbündel (F) zwischen der Quelle (1) und der Probe (E) durch Spiegel (13, 14) reflektiert wird.

6. Apparat zur ellipsometrischen Untersuchung nach einem der Ansprüche 1 bis 5, dadurch gekennzeichnet, daß die das Bündel zerlegenden Elemente in einer Hohlwelle übereinandergeschichtet sind und daß das Bündel im Mittelpunkt dieser Elemente läuft.

7. Verfahren zur ellipsometrischen Untersuchung einer Probe, wobei man ein polarisiertes Lichtbündel (F) über die Probe laufen laßt, das vorher eine rotierende Vorrichtung (5), die es in zwei phasenverschobene Wellen zerlegt, durchquert hat, darin bestehend, zwei periodische Lichtkomponenten, die pro Umdrehung der Vorrichtung (5) zur Zerlegung des Bündels zwei und vier Perioden haben, aufzufangen, zu trennen und ihre Phasen zu vergleichen, gekennzeichnet dadurch, daß ebenso die Intensitäten der zwei Lichtkomponenten verglichen werden, dadurch, daß es einen Apparat verwendet, wo das Bündel nacheinander über einen linearen Polarisator, die Vorrichtung zur Zerlegung des Bündels, die Probe und einen Analysator läuft, und dadurch, daß es die Formeln

$$H2 = rs.rs^*.\sin(2A)\ tg\psi \sin\Delta \sin(b)\ \sin(2u-2R-2P)$$
$$H4 = (1/2)\ rs.rs^*.\{[tg^2\psi - 1 + \cos(2A)(tg^2\psi + 1)][1-\cos(b)].$$
$$.\cos(4u-2P) + \sin(2A)\ tg\psi\ \cos\Delta\ [1-\cos(b)]\ \sin(4u + 2R-2P)\}$$

verwendet, wo rs den komplexen Reflexionskoeffizienten der Probe E senkrecht zur Einfallsebene des Bündels, * die konjugiert komplexe Zahl, A und P die Winkel der Polarisationsrichtungen des Analysators und des Polarisators mit der Einfallsebene, u den veränderlichen Winkel der Drehachse der doppelbrechenden Platten, die die Vorrichtung zur Zerlegung des Bündels bilden, und b und R die Phasenverschiebung und das Drehvermögen, jeweils durch die doppelbrechenden Platten bewirkt, bezeichnen.

8. Verfahren zur ellipsometrischen Untersuchung einer Probe nach Anspruch 7, dadurch gekennzeichnet, daß eine Analyse durch Drehung der Vorrichtung (5) zur Zerlegung des Bündels erfolgt.

9. Verfahren zur ellipsometrischen Untersuchung einer Probe nach Anspruch 7 oder 8, dadurch gekennzeichnet, daß es einen einleitenden Schritt zur Eichung umfaßt, der darin besteht,
   - näherungsweise die Winkel der Polarisationsrichtungen des Analysators und des Polarisators sowie den Winkel der Drehachse der doppelbrechenden Platten einzustellen,
   - mit Hilfe der Formeln an einem Eichmuster ellipsometrische Messungen auszuführen,
   - die Messungen mit theoretisch gültigen Ergebnissen zu vergleichen, um daraus Korrekturinformationen für die Werte der Winkeleinstellung abzuleiten, und
   - die Werte der Winkeleinstellung, die in den Formeln verwendet werden, mit Hilfe dieser Informationen zu korrigieren.

10. Verfahren zur ellipsometrischen Untersuchung einer Probe nach einem der Ansprüche 7 oder 8, dadurch gekennzeichnet, daß die Probe eine dünne Schicht ist, die eine zeitlich veränderli-

che Dicke hat.

FIG. 1

FIG. 2

FIG. 3

FIG. 4